# EUROPÄISCHE PATENTSCHRIFT

(11) **EP 3 811 015 B1**
(45) Veröffentlichungstag und Bekanntmachung des Hinweises auf die Patenterteilung: **18.05.2022**
(21) Anmeldenummer: 20720394.4
(22) Anmeldetag: 15.04.2020
(51) Int. Cl.: F27D 5/00, C21D 9/00, F16B 5/06

(54) **GITTERFÖRMIGER WERKSTÜCKTRÄGER**
GRID-TYPE WORKPIECE CARRIER
PORTE-PIÈCE EN FORME DE GRILLE

(30) Priorität: 18.04.2019 DE 202019102247 U
(43) Veröffentlichungstag der Anmeldung: 28.04.2021
(73) Patentinhaber: ZELL Systemtechnik GmbH, 89584 Ehingen (DE)
(72) Erfinder: ZELL, Ingo, 89584 Ehingen (DE)
(74) Vertreter: Baur & Weber Patentanwälte PartG mbB
(86) Internationale Anmeldenummer: PCT/EP2020/060538
(87) Internationale Veröffentlichungsnummer: WO 2020/212392

(56) Entgegenhaltungen:
- DE-U1-202013 011 806
- US-A1- 2003 180 677

## Beschreibung

Die Erfindung betrifft einen gitterförmigen Werkstückträger mit einander kreuzenden Gitterelementen, die ineinandergreifende Aussparungen haben, sodass sie ein Gitter formen.

Werkstückträger dienen dazu, eines oder mehrere Werkstücke bereitzustellen und zu halten, um sie in einer Fertigungsstation zu bearbeiten. Die Bearbeitung kann beispielsweise Härten, Reinigen, Transport, Heißbehandlung oder Sintern umfassen. Eine einfache Ausführung eines Werkstückträgers ist eine im Wesentlichen rechteckige Platte mit Auflagen und/oder Halterungen für eines oder mehrere Werkstücke.

Ein gitterförmiger Werkstückträger, wie beispielsweise in der DE 10 2009 037 293 A1 gezeigt, ist stabil, material- und gewichtssparend und erlaubt einen Zugang von mehreren Seiten zum Werkstück. Solch ein gitterförmiger Werkstückträger kann aus ineinandergreifenden stegförmigen Gitterelementen aus Carbon oder Keramik gefertigt sein.

Die US 2003/180677 A1 zeigt eine Vorrichtung zur Wärmebehandlung eines Werkstücks, die für einen langen Zeitraum verwendet werden kann, indem ihre Verformung aufgrund thermischer Verformung beseitigt oder minimiert wird, und die die Wärmebehandlung des Werkstücks effizient durchführen kann, indem die Menge an Wärmeenergie, die von der Vorrichtung in einem Wärmebehandlungsofen absorbiert wird, reduziert wird. Die Vorrichtung umfasst einen äußeren Umfangsrahmen, der aus einer Vielzahl von Elementen gebildet ist, und einen Platzierungsteil, der in dem äußeren Umfangsrahmen angeordnet ist und aus einer Vielzahl von Elementen zum Platzieren des Werkstücks gebildet ist. Die Elemente sind beweglich miteinander verbunden sind und die Verbindung der den äußeren Umfangsrahmen bildenden Elemente untereinander und die Verbindung dieser Elemente mit den den Platzierungsteil bildenden Elementen erfolgt durch Ausdehnungsintervalle, die in der Lage sind, die Ausdehnung der Elemente zu absorbieren, wenn die Elemente thermisch ausgedehnt werden. Die DE 20 2013 011 806 U1 zeigt ein mehrteiliges Chargiergestell zur Aufnahme von Härteteilen, oder anderen Gegenständen, die in Vakuum- oder Schutzgasöfen einer Wärmebehandlung unterzogen werden sollen. Das Chargiergestell umfasst eine Vielzahl von quer verlaufenden Halteleisten und eine Vielzahl von längs verlaufenden Verbindungsleisten formschlüssig und sich rechtwinklig kreuzend, ein Gitterrost bildend kammartig ineinander gesteckt und fixiert sind, wobei die Halteleisten in Gebrauchslage in ihrer jeweils oberen Stirnkante in regelmäßigen Abständen verteilt Aussparungen zur Aufnahme von längs parallel zu den Verbindungsleisten erstreckenden langen Keramikelementen eingearbeitet sind, derart, dass die in die Aussparungen eigelegten und als Aufnahmelemente für Härtegut oder anderer Gegenstände dienenden Keramikelemente nach oben über das Niveau des Gitterrostes hinausragen.

Es stellt sich die Aufgabe, einen alternativen gitterförmigen Werkstückträger bereitzustellen.

Die Aufgabe wird gelöst durch einen Werkstückträger mit den Merkmalen des Anspruchs 1.

Der gitterförmige Werkstückträger umfasst eine Mehrzahl parallel angeordneter stegförmiger erster Gitterelemente mit Aussparungen und eine Mehrzahl quer dazu angeordneter stegförmiger zweiter Gitterelemente mit Aussparungen. Die, beispielsweise schlitzförmigen, Aussparungen der ersten und zweiten Gitterelemente greifen derart ineinander, dass die einander kreuzenden ersten und zweiten Gitterelemente ein Gitter formen. Eine mechanisch feste Fixierung der ersten Gitterelemente erfolgt nur an einigen der quer zu ihnen angeordneten zweiten Gitterelemente. Diese zweiten Gitterelemente, an denen die ersten Gitterelemente mechanisch fest fixiert sind, befinden sich an gegenüberliegenden Seiten des Gitters in einem Randbereich des Gitters. Die mechanisch feste Fixierung ist eine stoffschlüssige Verbindung.

Mit anderen Worten: Die zweiten Gitterelemente jenseits des Randbereichs müssen nicht mechanisch fest mit den ersten Gitterelementen verbunden werden, sondern werden von den von oben und unten eingreifenden ersten Gitterelementen an ihrem Platz gehalten. Die zweiten Gitterelemente jenseits des Randbereichs weisen Aussparungen sowohl an der Ober- als auch der Unterseite des Gitters auf, in die die kreuzenden ersten Gitterelemente eingreifen und so die zweiten Gitterelemente in ihrer Position halten.

Bei solch einem Gitter können die ersten Gitterelemente in Längsrichtung (längs) und die zweiten Gitterelemente in Querrichtung (quer) dazu, oder umgekehrt, angeordnet sein.

Der Werkstückträger kann für verschiedene Fertigungsschritte, beispielsweise Härten, Reinigen und Transport eingesetzt werden.

Vorteilhafterweise sind die zweiten Gitterelemente, an denen die ersten Gitterelemente mechanisch fest fixiert sind, die äußeren Gitterelemente an gegenüberliegenden Seiten des Gitters. Dies erlaubt eine einfache Fixierung an den gut zugänglichen Außenseiten des Gitters.

In einer Ausführung sind die ersten und zweiten Gitterelemente metallen, was deren einfache Fertigung, die Ausbildung eines stabilen Gitters und Schweißen als Fixierungstechnik ermöglicht. Als Metall kommt Stahl in Frage, des den Einsatz des Werkstückträgers beispielsweise bei bis zu 1200 Grad Celsius erlaubt. Ferner ist der Werkstückträger emulsions- und ölbeständig durch die Verwendung dieses Materials. Da Stahl sich leicht bearbeiten lässt, kann der Werkstückträger in einfacher Weise an verschiedene Werkstücke angepasst werden. Aus vorgefertigten Gitterelementen kann ein an die Bedürfnisse angepasster Werkstückträger in einfacher Weise gefertigt werden.

Die mechanisch feste Fixierung ist eine Fixierung von Kreuzungspunkten ineinandergreifender Gitterelemente unter Einsatz eines Fixierungsmittels, das über das bloße Ineinandergreifen der Gitterelemente hinaus geht. Die mechanisch feste Fixierung ist eine stoffschlüssige Verbindung, beispielsweise kann die mechanisch feste Fixierung eine Schweißverbindung, insbesondere eine Schweißpunktverbindung, oder eine Klebeverbindung sein. Diese Fixierungstechniken sind stabil und einfach zu fertigen. In einer Ausführung wird eine stoffschlüssige Verbindung als mechanisch feste Fixierung nur eines Teils der ersten Gitterelemente verwendet.

Zumindest ein Teil der ersten und der zweiten Gitterelemente hat an einer ihrer Gitteroberseite zugewandten Seite Werkstückauflagebereiche, die das oder die Werkstücke halten.

Die Werkstückauflagebereiche können als Erhöhungen oder Vertiefungen der ersten oder zweiten Gitterelemente an der Gitteroberseite ausgebildet sein, um so die Auflage des Werkstücks in einer geeigneten Position zu ermöglichen.

In einer Ausführung sind entweder bei den ersten oder bei den zweiten Gitterelementen die Aussparungen kammförmig angeordnet. "Kammförmig" bedeutet, dass alle Aussparung entweder an der Oberseite des Gitterelements oder an der Unterseite des Gitterelements angeordnet sind. Die Oberseite des Gitterelements ist der Gitteroberseite zugewandt. Die Unterseite des Gitterelements ist der Gitterunterseite zugewandt. Es sei bemerkt, dass bei kammförmigen ersten Gitterelementen es sowohl erste Gitterelemente, deren Aussparungen an der Oberseite sind, geben kann als auch erste Gitterelemente, deren Aussparungen an der Unterseite sind. Die zweiten Gitterelemente weisen dann Aussparungen sowohl an Ober- als auch Unterseite auf. Bei kammförmigen zweiten Gitterelementen ist es umgekehrt.

In einer Ausführung sind die zweiten Gitterelemente jenseits des Randbereichs formschlüssig ohne Spiel mit den ersten Gitterelementen verbunden. Es ermöglicht eine gute Passform und eine möglicherweise zusätzlich formschlüssige Verbindung. Alternativ sind die zweiten Gitterelemente jenseits des Randbereichs formschlüssig mit Spiel mit den ersten Gitterelementen verbunden, sodass mechanischer oder thermischer Stress aufgefangen werden kann.

Weitere vorteilhafte Ausführungen ergeben sich aus den abhängigen Ansprüchen.

Im Folgenden wird die Erfindung anhand von Ausführungsbeispielen in den Zeichnungen näher erläutert.
- Fig. 1A: zeigt schematisch ein Ausführungsbeispiel eines gitterförmigen Werkstückträgers in einer Aufsichtsdarstellung.
- Fig. 1B, 1C, 1D: zeigen Ausführungsbeispiele stegförmiger Gitterelemente des in Figur 1A dargestellten Werkstückträgers in einer Seitenansicht.
- Fig. 2: zeigt ein weiteres Ausführungsbeispiel eines gitterförmigen Werkstückträgers.
- Fig. 3: zeigt ein weiteres Ausführungsbeispiel eines gitterförmigen Werk-stückträgers.

In den Figuren sind gleiche oder funktional gleich wirkende Bauteile mit den gleichen Bezugszeichen versehen.

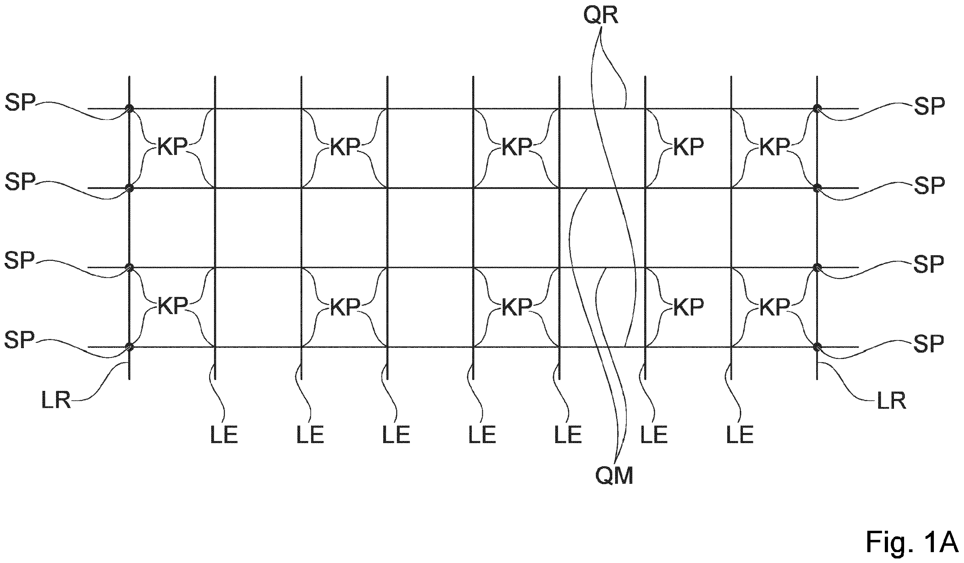

Figur 1A zeigt schematisch ein Ausführungsbeispiel eines gitterförmigen Werkstückträgers in einer Aufsichtsdarstellung.

Der Werkstückträger umfasst eine Mehrzahl längs angeordneter stegförmiger Gitterelemente LE, LR sowie eine Mehrzahl quer dazu angeordneter stegförmiger Gitterelemente QR, QM. Die einander kreuzenden längs und quer angeordneten Gitterelemente QR, QM, LE, LR formen ein Gitter.

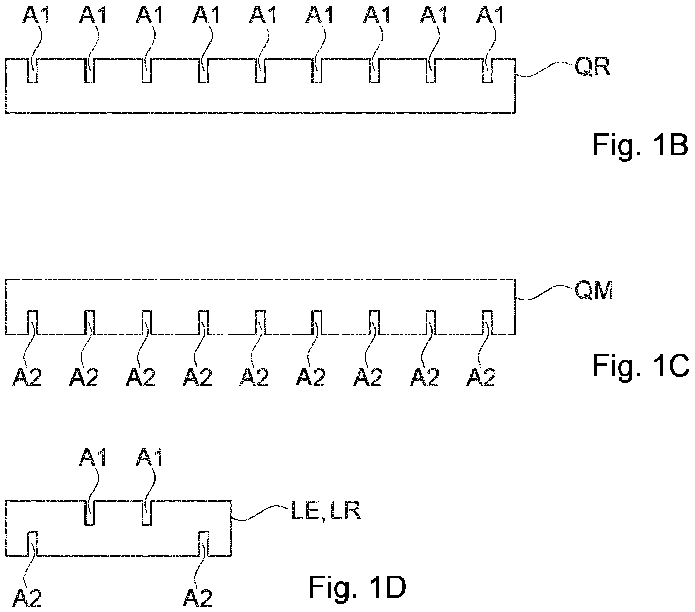

Die Figuren 1B, 1C, 1D zeigen die in der Figur 1A dargestellten stegförmigen Gitterelemente QR, QM, LE, LR in der Seitenansicht. Die stegförmigen Gitterelemente QR, QM, LE, LR sind band- oder streifenförmig. Sie sind zwar quaderförmig, jedoch mit sehr geringer Breite im Vergleich zu Höhe und Länge. Ihre Höhe ist geringer als ihre Länge. Die Gitterelemente QR, QM, LE, LR sind metallen, vorzugsweise aus Stahl.

Das Gitter umfasst mehrere in Längsrichtung angeordnete, zueinander parallele, stegförmige Gitterelemente LE, LR. Hierzu rechtwinklig, in Querrichtung angeordnet verlaufen mehrere parallel angeordnete Gitterelemente QR, QM. Die äußeren längs angeordneten Gitterelemente LR sind in einem Randbereich, der diese beiden Gitterelemente LR umfasst. Es sind auch asymmetrisch angeordnete Gitterelemente denkbar.

Die längs und quer angeordneten Gitterelemente QR, QM, LE weisen Aussparungen A1, A2 auf, die an Kreuzungspunkten KP der Gitterelemente QR, QM, LE ineinandergreifen. Die Gitterelemente QR, QM, LE, LR in diesem Ausführungsbeispiel haben eine rechteckige Grundform derart, dass die Kontur der Seitenansicht lediglich bei den Aussparungen A1, A2 von der Rechteckform abweicht.

Die äußeren quer angeordneten Gitterelemente QR weisen nur Aussparungen A1 auf einer Oberseite des Gitters auf, sodass sie eine kammartige Konturlinie in der Seitenansicht haben. Die dazwischen quer angeordneten Gitterelemente QM weisen Aussparungen A2 nur an einer Unterseite des Gitters auf. Die äußeren Aussparungen A2 der längs angeordneten Gitterelemente LE, LR sind an der Unterseite und die zwischen liegenden Aussparungen A1 sind an der Oberseite angeordnet.

Die Aussparungen A1, A2 der längs angeordneten Gitterelemente LE, LR sind zu den quer angeordneten Gitterelementen QR, QM korrespondierend angeordnet, sodass in den Kreuzungspunkten KP des Gitters eine Aussparung A1 an der Oberseite eines Gitterelements QR, LE, LR in eine Aussparung A2 an der Unterseite des kreuzenden Gitterelements QM, LE, LR eingreift, und umgekehrt. Die Breite der Aussparung A1, A2 entspricht im Wesentlichen der Breite des umgriffenen Gitterelements QR, QM, LE, LR. Die Summe der Höhen von zwei ineinander greifenden Aussparung A1, A2 entspricht im Wesentlichen der Höhe der Gitterelemente QM, QR, LE. Obgleich längs und quer angeordnete Gitterelemente QM, QR, LE, LR im Wesentlichen formschlüssig ineinander greifen, kann die Verbindungen dennoch Spiel haben. Dies ist ein fertigungs- und anwendungsbedingter Bewegungsfreiraum, in dem sich die Gitterelemente QM, QR, LE, LR während oder nach der Montage gegeneinander bewegen lassen. Spiel kann thermischen oder mechanischen Stress, der auf das Gitter wirkt, an den Kreuzungspunkten KP auffangen.

Zur Fixierung des Gitters sind die quer angeordneten Gitterelemente QR, QM an den äußeren längs angeordneten Gitterelementen LR im Randbereich mechanisch fest fixiert. Die fixierende Verbindung SP ist vorteilhafterweise eine stoffschlüssige Verbindung, beispielsweise eine Schweißverbindung oder eine Klebeverbindung. Eine Verbindung in Form von Schweißpunkten geht mit einer einfachen Herstellung und einer robusten, sicheren Verbindung einher.

Eine mechanisch feste Verbindung besteht nur zwischen den quer angeordneten Gitterelementen QR, QM und den äußeren längs angeordneten Gitterelementen LR im Randbereich. Die derart mechanisch fest fixierten Gitterelemente LR, QM, QR haben eine leiterförmige Struktur. Die jenseits des Randbereiches längs angeordneten Gitterelemente LE sind durch Formschluss mit den quer angeordneten Gitterelementen QR, QM verbunden, die in die Aussparungen A1, A2 an Ober- und Unterseite der Gitterelemente LE eingreifen. Wegen der Eingriffe an Ober- und Unterseite der Gitterelemente LE ist eine darüberhinausgehende Verbindung nicht erforderlich, um die Gitterelemente LE jenseits des Randbereichs in ihrer Position zu halten.

Es sei bemerkt, dass bei ohne Spiel ineinandergreifenden, längs und quer angeordneten Gitterelementen QR, QM, LM die formschlüssige Verbindung an den Kreuzungspunkten KP jenseits des Randbereiches zusätzlich mit einer kraftschlüssigen Verbindung einhergehen kann.

Die Fixierung der quer angeordneten Gitterelemente QR, QM kann in einem alternativen Ausführungsbeispiel an mehr oder anderen als den längs angeordneten äußeren Gitterelementen LR erfolgen. Der Randbereich wäre dann entsprechend breiter.

Die mechanisch feste Fixierung lediglich an längs angeordneten Gitterelementen LR im Randbereich ermöglicht die Ausbildung eines stabilen Gitters mit reduziertem Aufwand. Ferner hat die ausschließliche Fixierung im Randbereich den Vorteil, dass bei mechanischem oder thermischem Stress eine Relativbewegung auf Grund des Spiels an den Kreuzungspunkten KP der längs und quer angeordneten stegförmigen Gitterelemente LE, QM, QR möglich ist, was eine Verformung des ganzen Gitters bei seinem Einsatz als Werkstückträger in der Fertigung verhindert.

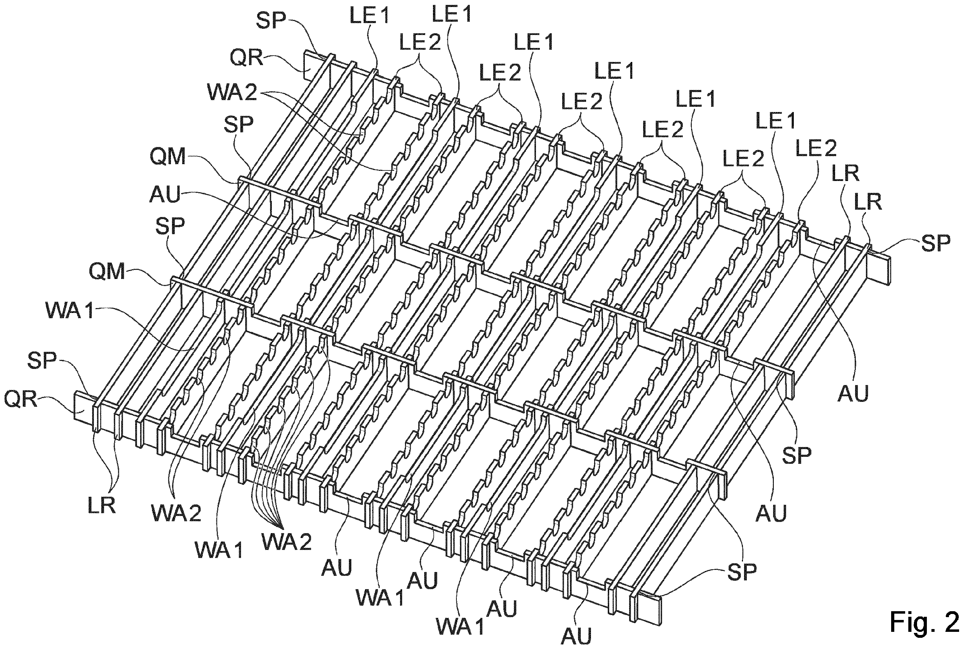

Figur 2 zeigt ein weiteres Ausführungsbeispiel eines gitterförmigen Werkstückträgers. Erweist eine Mehrzahl längs angeordneter stegförmiger Gitterelemente LR, LE1, LE2 auf. Ferner sind vier quer angeordnete Gitterelemente QR, QM vorgesehen. Die längs und quer angeordneten Gitterelemente LR, LE1, LE2, QR, QM kreuzen sich und formen so ein Gitter.

Im Randbereich sind an gegenüberliegenden Seiten jeweils zwei längs angeordnete Gitterelemente LR mit rechteckiger Grundform vorgesehen. Im Bereich dazwischen sind erste längs angeordnete Gitterelemente LE1 und zweite längs angeordnete Gitterelemente LE2 vorgesehen. Die ersten längs angeordneten Gitterelemente LE1 weisen Werkstückauflagebereiche WA1 auf. Der Werkstückauflagebereich WA1 ist als lang gestreckte Vertiefung an der Oberseite ausgebildet und erstreckt sich zwischen zwei benachbarten quer angeordneten Gitterelementen QR, QM. Die zweiten längs angeordneten Gitterelemente LE2 weisen zwischen benachbarten quer angeordneten Gitterelementen QR, QM eine Mehrzahl von halbkreisförmigen Vertiefungen auf der Oberseite auf, die ebenfalls als Werkstückauflagebereiche WA2 dienen.

Benachbart zu den längs angeordneten Gitterelementen LR im linken Randbereich ist ein erstes, gefolgt von einem zweiten Gitterelement LE1, LE2 längs angeordnet. Die dazwischen längs angeordneten Gitterelemente LE1, LE2 sind in Gruppen von je drei Gitterelementen LE2, LE1, LE2 angeordnet. Eine Gruppe umfasst eine Abfolge von einem zweiten, einem ersten und einem zweiten Gitterelement LE2, LE1, LE2. Der Abstand zwischen den Gruppen ist größer als der Abstand zwischen den einzelnen Gitterelementen LE2, LE1, LE2 der Gruppe. Die Anordnung und Form der Werkstückauflagebereiche WA1, W2 zusammen mit der Gruppierung ermöglicht eine Werkstückauflage und sicheren Halt für mehrere Werkstücke.

Die längs angeordneten Gitterelemente LR, LE1, LE2 weisen äußere schlitzförmige Aussparungen an der Unterseite auf und dazwischen zwei schlitzförmige Aussparungen an der Oberseite. Die Aussparungen greifen in korrespondierende Aussparungen der quer angeordneten Gitterelemente QR, QM ein.

Die quer angeordneten äußeren Gitterelemente QR und die quer angeordneten Gitterelemente QM dazwischen unterscheiden sich in ihrer Form nur darin, dass die äußeren Gitterelemente QR etwas weiter über die äußeren, längs angeordneten Gitterelemente LR hinausragen. Die äußeren quer angeordneten Gitterelemente QR weisen schlitzförmige Aussparungen nur an der Oberseite auf. Die dazwischen liegenden quer angeordneten Gitterelemente QM weisen schlitzförmige Aussparungen nur an der Unterseite auf. Zwischen den Aussparungen für die Gruppen von längs angeordneten Gitterelementen LE1, LE2 sind Vertiefungen AU an der Oberseite der quer angeordneten Gitterelemente QR, QM vorgesehen. Mechanisch feste Fixierungen SP sind zwischen den quer angeordneten Gitterelementen QR, QM und den äußeren längs angeordneten Gitterelementen LR vorgesehen. In einer alternativen Ausführungsform können auch mechanisch feste Verbindungen SP an alternativen oder weiteren längs angeordneten Gitterelementen LR im Randbereich vorgesehen sein. Die Verbindungen SP sind in diesem Ausführungsbeispiel Schweißpunkte.

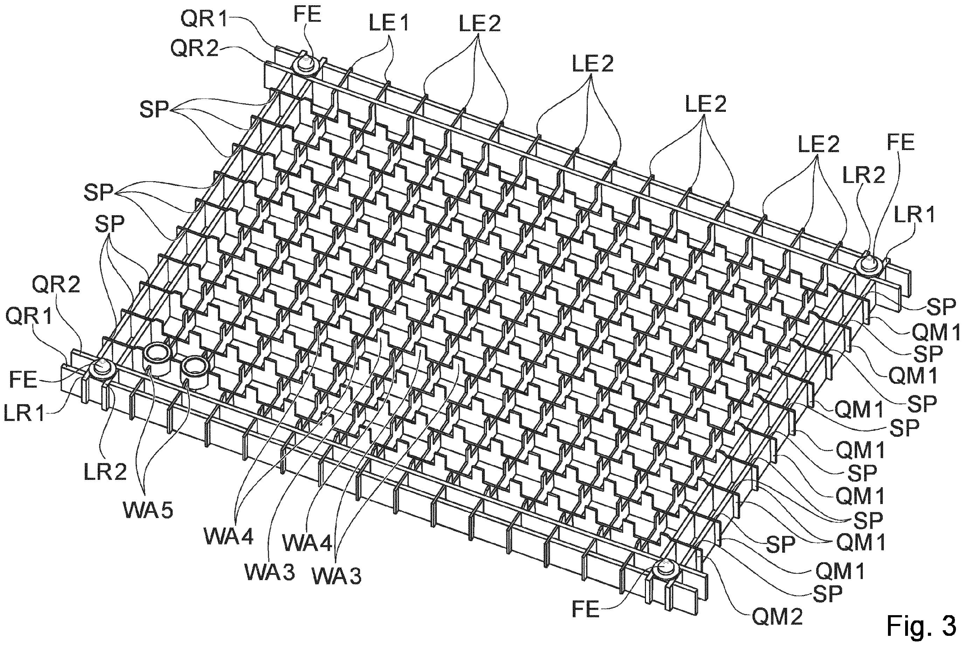

Figur 3 zeigt ein weiteres Ausführungsbeispiel eines gitterförmigen Werkstückträgers mit einer Mehrzahl von längs angeordneten Gitterelementen LR1, LR2, LE1, LE2 und kreuzenden, quer angeordneten Gitterelementen QR1, QR2, QM1, QM2, die ein Gitter formen.

Im Randbereich sind an gegenüberliegenden Seiten jeweils zwei längs angeordnete stegförmige Gitterelemente LR1, LR2 vorgesehen. Jeweils zwei quer angeordnete stegförmige Gitterelemente QR1, QR2 sind randseitig vorgesehen. Die äußeren quer angeordneten Gitterelemente QR1 weisen Aussparungen lediglich auf der Oberseite auf. Die dazu benachbarten quer angeordneten, randseitigen Gitterelemente QR2 weisen Aussparungen lediglich auf der Unterseite auf. Dies ist auch der Fall bei den dazwischen angeordneten quer verlaufenden Gitterelementen QM1 und QM2.

Die längs angeordneten Gitterelemente LR1, LR2, LE1, LE2 weisen außen jeweils eine oben angeordnete Aussparung und dazwischen unten angeordnete Aussparungen auf.

Sowohl die beiden benachbarten äußeren quer angeordneten Gitterelemente QR1, QR2 als auch die beiden benachbarten äußeren längs angeordneten Gitterelemente LR1, LR2 sind an Eckpunkten des Gitters mit Fixierungselementen FE derart befestigt, sodass jeweils die beiden äußeren kreuzenden Gitterelemente QR1, QR2, LR1, LR2 miteinander verbunden sind. Solch ein Fixierungselement FE kann als Schraube oder Niete in einem Eckquadranten des Gitters angeordnet sein. Alternativ kann eine Schweißverbindung vorgesehen sein.

Die quer angeordneten Gitterelemente QM1, QM2 zwischen den beiden benachbarten äußeren quer angeordneten Gitterelementen QR1, QR2 sind mechanisch fest fixiert, beispielsweise durch Schweißpunkte SP, an den äußeren längs angeordneten Gitterelementen LR1 im Randbereich. Alternativ sind andere, vorzugsweise stoffschlüssige Verbindungen denkbar. Die Fixierung kann alternativ an anderen oder weiteren längs angeordneten Gitterelementen LR2 im Randbereich erfolgen.

Obgleich die längs angeordneten Gitterelemente LE1, LE2 jenseits des Randbereichs nicht mechanisch fest an den quer angeordneten Gitterelementen QR1, QR2 fixiert sind, werden sie auf Grund ihrer formschlüssigen Verbindungen, sei es mit oder ohne Spiel, im Gitter gehalten. Die formschlüssige Verbindung wird durch das Zusammenspiel von den von oben eingreifenden quer verlaufenden Gitterelementen QR2, die benachbart zu den äußeren quer angeordneten Gitterelementen QR1 sind, und den anderen von unten eingreifenden quer angeordneten Gitterelementen QR1, QM1, QM2 erreicht.

Jenseits des Randbereichs sind die Gitterelemente QM1, QM2, LE1, LE2 im Kreuzungsbereich der ineinandergreifenden Aussparungen abgesenkt, sodass durch dazwischen aufragende rechteckförmige Erhöhungen Werkstückauflagebereiche WA3, WA4 ausgebildet sind. Die Breite der Erhöhungen unterscheidet sich für längs und quer laufende Erhöhungen.

Eine weitere Ausführung von Werkstückauflagebereichen WA5 ist im unteren linken Gitterbereich gezeigt. In den Absenkungen des Kreuzungspunkts der Gitterelemente LE1, QM2 sind hülsenförmige Halter eingebracht, in die das Werkstück oder ein, beispielsweise gabelförmiger, Werkstückhalter (in Figur 3 nicht dargestellt) eingesetzt werden können.

Es sei bemerkt, dass die oben verwendeten Bezeichnungen "längs" und "quer" von der Orientierung der Darstellung in den Figuren 1A, 2 und 3 herrühren. In einer alternativen Darstellung kann das Gitterelement um 90 Grad gedreht sein, sodass "längs" und "quer" vertauscht wären. Verallgemeinernd, und in alternativer Formulierung, entspricht "längs" einer ersten Richtung und "quer" einer dazu rechtwinkligen oder nahezu rechtwinkligen Richtung.

Die vorstehend und die in den Ansprüchen angegebenen sowie die den Abbildungen entnehmbaren Merkmale sind sowohl einzeln als auch in verschiedener Kombination vorteilhaft kombinierbar und realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Gitterförmiger Werkstückträger mit
einer Mehrzahl parallel angeordneter stegförmiger erster Gitterelemente (QM, QR, QR1, QR2, QM1, QM2) mit Aussparungen (A1, A2) und
einer Mehrzahl quer dazu angeordneter stegförmiger zweiter Gitterelemente (LE, LR, LE1, LE2, LR1, LR2) mit Aussparungen (A1, A2),
wobei die Aussparungen der ersten und zweiten Gitterelemente derart ineinandergreifen, dass die einander kreuzenden ersten und zweiten Gitterelemente ein Gitter formen,
wobei die ersten Gitterelemente an nur an einigen der zweiten Gitterelemente (LR, LR1, LR2) aus der Mehrzahl zweiter Gitterelemente, die in einem Randbereich auf gegenüberliegenden Seiten des Gitters angeordnet sind, mechanisch fest fixiert sind, wobei die mechanisch feste Fixierung eine stoffschlüssige Verbindung ist.

2. Gitterförmiger Werkstückträger nach Anspruch 1,
wobei die zweiten Gitterelemente aus der Mehrzahl zweiter Gitterelement, die im Randbereich angeordnet sind, die zwei an gegenüberliegenden Seiten des Gitters angeordneten, äußeren zweiten Gitterelemente umfasst.

3. Gitterförmiger Werkstückträger nach Anspruch 1 oder 2,
dessen erste und zweite Gitterelemente metallen sind.

4. Gitterförmiger Werkstückträger nach Anspruch 3,
dessen erste und zweite Gitterelemente aus Stahl gefertigt sind.

5. Gitterförmiger Werkstückträger nach einem der vorherigen Ansprüche,
wobei die mechanisch feste Fixierung eine Schweißverbindung, insbesondere eine Schweißpunktverbindung, oder eine Klebeverbindung ist.

6. Gitterförmiger Werkzeugträger nach einem der vorherigen Ansprüche,
wobei zumindest ein Teil der ersten und der zweiten Gitterelemente an ihrer einer Gitteroberseite zugewandten Seite Werkstückauflagebereiche (WA1, WA2, WA3) umfasst.

7. Gitterförmiger Werkzeugträger nach Anspruch 6,
wobei die Werkstückauflagebereiche als Erhöhungen oder Vertiefungen der ersten oder zweiten Gitterelemente an der Gitteroberseite ausgebildet sind.

8. Gitterförmiger Werkzeugträger nach einem der vorherigen Ansprüche,
wobei entweder bei den ersten oder bei den zweiten Gitterelementen die Aussparungen kammförmig angeordnet sind.

9. Gitterförmiger Werkzeugträger nach einem der vorherigen Ansprüche
wobei die zweiten Gitterelemente jenseits des Randbereichs Aussparungen auf beiden Seiten aufweisen.

10. Gitterförmiger Werkzeugträger nach Anspruch 9,
wobei die zweiten Gitterelemente jenseits des Randbereichs formschlüssig ohne Spiel mit den ersten Gitterelementen verbunden sind
oder wobei die zweiten Gitterelemente jenseits des Randbereichs formschlüssig mit Spiel mit den ersten Gitterelementen verbunden sind.

## Claims

1. Grid-shaped workpiece carrier comprising
a plurality of strut-like first grid elements (QM, QR, QR1, QR2, QM1, QM2), which are arranged in parallel and have recesses (A1, A2), and
a plurality of strut-like second grid elements (LE, LR, LE1, LE2, LR1, LR2), which are arranged transversely thereto and have recesses (A1, A2),
wherein the recesses of the first and second grid elements mutually engage in such a way that the first and second grid elements crossing each other form a grid,
wherein the first grid elements are mechanically rigidly fixed only to some of the second grid elements (LR, LR1, LR2) of the plurality of second grid elements, which are arranged in an edge region on opposite sides of the grid, wherein the mechanically rigid fixing is a material bond.

2. Grid-shaped workpiece carrier according to claim 1,
wherein the second grid elements of the plurality of second grid elements arranged in the edge region comprise the two outer second grid elements arranged on opposite sides of the grid.

3. Grid-shaped workpiece carrier according to either claim 1 or claim 2,
the first and second grid elements of which are metal.

4. Grid-shaped workpiece carrier according to claim 3,
the first and second grid elements of which are made of steel.

5. Grid-shaped workpiece carrier according to any of the preceding claims,
wherein the mechanically rigid fixing is a welded joint, in particular a spot weld joint, or an adhesive joint.

6. Grid-shaped tool carrier according to any of the preceding claims,
wherein at least some of the first and second grid elements comprise workpiece support regions (WA1, WA2, WA3) on the side of the grid elements that faces a grid top side.

7. Grid-shaped tool carrier according to claim 6,
wherein the workpiece support regions are formed as elevations or depressions of the first or second grid elements on the grid top side.

8. Grid-shaped tool carrier according to any of the preceding claims,
wherein either the first or the second grid elements have the recesses arranged in a comb shape.

9. Grid-shaped tool carrier according to any of the preceding claims
wherein the second grid elements have recesses on both sides beyond the edge region.

10. Grid-shaped tool carrier according to claim 9,
wherein the second grid elements are interlockingly connected without play to the first grid elements beyond the edge region, or wherein the second grid elements are interlockingly connected with play to the first grid elements beyond the edge region.

## Revendications

1. Porte-pièce en forme de grille comportant
une pluralité de premiers éléments de grille en forme de tige (QM, QR, QR1, QR2, QM1, QM2) disposés parallèlement et comportant des évidements (A1, A2) et
une pluralité de seconds éléments de grille en forme de tige (LE, LR, LE1, LE2, LR1, LR2) disposés transversalement aux premiers éléments de grille et comportant des évidements (A1, A2),
dans lequel les évidements des premiers et seconds éléments de grille viennent en prise les uns dans les autres de telle sorte que les premiers et seconds éléments de grille se croisant forment une grille,
dans lequel les premiers éléments de grille sont solidement fixés mécaniquement à seulement certains des seconds éléments de grille (LR, LR1, LR2) de la pluralité de seconds éléments de grille, lesquels sont disposés dans une région de bord sur des côtés opposés de la grille, la fixation solide mécaniquement étant une liaison matérielle.

2. Porte-pièce en forme de grille selon la revendication 1,
dans lequel les seconds éléments de grille de la pluralité de seconds éléments de grille qui sont disposés dans la région de bord comprennent les deux seconds éléments de grille extérieurs disposés sur des côtés opposés de la grille.

3. Porte-pièce en forme de grille selon la revendication 1 ou 2,
dont les premiers et seconds éléments de grille sont métalliques.

4. Porte-pièce en forme de grille selon la revendication 3,
dont les premiers et seconds éléments de grille sont en acier.

5. Porte-pièce en forme de grille selon l'une des revendications précédentes,
dans lequel la fixation solide mécaniquement est une liaison soudée, en particulier une liaison par soudure par point, ou une liaison adhésive.

6. Porte-pièce en forme de grille selon l'une des revendications précédentes,
dans lequel au moins une partie des premiers et seconds éléments de grille comprend des régions de support de pièce (WA1, WA2, WA3) sur leur côté tourné vers un côté supérieur de grille.

7. Porte-pièce en forme de grille selon la revendication 6,
dans lequel les régions de support de pièce sont formées comme des élévations ou des dépressions des premiers ou seconds éléments de grille sur le côté supérieur de grille.

8. Porte-pièce en forme de grille selon l'une des revendications précédentes,
dans lequel les évidements sont disposés en forme de peigne soit dans les premiers éléments de grille, soit dans les seconds éléments de grille.

9. Porte-pièce en forme de grille selon l'une des revendications précédentes
dans lequel les seconds éléments de grille présentent des évidements sur les deux côtés au-delà de la région de bord.

10. Porte-pièce en forme de grille selon la revendication 9,
dans lequel les seconds éléments de grille sont reliés par complémentarité de forme sans jeu aux premiers éléments de grille au-delà de la région de bord ou
dans lequel les seconds éléments de grille sont reliés par complémentarité de forme avec jeu aux premiers éléments de grille au-delà de la région de bord.
